# EUROPÄISCHE PATENTSCHRIFT

(11) **EP 0 569 875 B1**
(45) Veröffentlichungstag und Bekanntmachung des Hinweises auf die Patenterteilung: **26.07.1995**
(21) Anmeldenummer: 93107435.5
(22) Anmeldetag: 07.05.1993
(51) Int. Cl.: F04B 43/12, F04B 43/00, F16L 33/00

(54) **Schlauchpumpe**
Hose pump
Pompe à tuyau

(30) Priorität: 11.05.1992 DE 4214916
(43) Veröffentlichungstag der Anmeldung: 18.11.1993
(73) Patentinhaber: Allweiler AG, D-78315 Radolfzell (DE)
(72) Erfinder: Wehling, Werner, W-4270 Dorsten (DE)
(74) Vertreter: Hiebsch, Gerhard F., Dipl.-Ing.

(56) Entgegenhaltungen:
- DE-A- 3 248 573
- DE-A- 3 420 861
- DE-U- 9 203 042
- FR-A- 851 636
- FR-A- 2 094 506
- SU-A- 345 295

## Beschreibung

Die Erfindung betrifft eine Schlauchpumpe nach dem Oberbegriff des Patentanspruches 1.

Eine derartige peristaltische Pumpe beschreibt die SU-A-345 295 mit einem Pumpschlauch und einem Druckrollenpaar, das im Schlauchinnenraum einen durch zwei Quetschstellen abgeschlossenen Kammerabschnitt erzeugt. Beim Drehen des Läufers wälzen sich die Druckrollen an dem sich an der Gehäusewandung abstützend festliegenden Pumpschlauch ab, und mit ihnen verschieben sich jene Quetschstellen in Förderrichtung, wodurch das im Schlauchinnenraum vorhandene Fördergut vom Schlaucheingang zum Austrittsende des Pumpschlauches gefördert wird; die dem Schlaucheingang nahe Quetschstelle bewirkt dank der Rückstellkraft der Schlauchwandung eine Saugkraft auf das eintretende Fördergut, welches dann von dem oben beschriebenen Kammerabschnitt zum Austrittsende des Pumpschlauches transportiert wird. Die jeweils mit einem Stutzen ausgestatteten freien Enden des Pumpschlauches sind mit einem stirnseitigen Teller in schulterartigen Einformungen des Pumpengehäuses mit Schrauben festgelegt.

Bei einer peristaltischen Pumpe nach DE-A-32 48 573 sind die freien Enden des Pumpschlauches jeweils mit einem angeformten Flanschkragen ausgerüstet, der in einem Flanschpaar von Wandstutzen außerhalb des eigentlichen Pumpengehäuses in Abstand zu dessen Wandung klemmend gehalten wird.

Die Einspannstellen werden relativ weit vom Arbeitsbereich des Verdrängers entfernt vorgesehen, was zu großen freien Stauch-/Knick-/Biegelängen des Pumpschlauches führt und zu einer dadurch bedingten hohen Walkarbeit am freien druckseitigen Ende des Pumpschlauches. Infolge dieser Einflüsse ist die Lebensdauer des Pumpschlauches in diesem Bereich erfahrungsgemäß sehr gering. Zudem sind zum Abdichten des Pumpschlauches gegenüber dem Pumpengehäuse zusätzliche Bauteile unerläßlich.

Diese Mängel sind nicht zuletzt deshalb von erheblicher Bedeutung, da zum einen -- insbesondere bei unsauberen oder aggressiven Fördermedien -- das Platzen oder Ausbrechen eines Pumpschlauches zu einer höchst unerwünschten Kontaminierung des Pumpenumfeldes führen kann und zum anderen das Wechseln des Pumpschlauches besonders kostenträchtig ist.

In Kenntnis dieser Gegebenheiten hat sich der Erfinder das Ziel gesetzt, eine peristaltische Pumpe der eingangs beschriebenen Art zu schaffen, mit welcher die erkannten Mängel behoben werden.

Zur Lösung dieser Aufgabe führt die Lehre des unabhängigen Patentanspruches; die Unteransprüche bieten günstige Ausgestaltungen an.

Erfindungsgemäß werden die Anschlußenden des Pumpschlauches in zwei Wandstutzen des Pumpengehäuses an einer Tangente an die Innenfläche der Gehäusewandung des Pumpengehäuses durch deren Schnittpunkt mit dem zu den Mittelachsen der Wandstutzen parallelen Pumpendurchmesser an einem die Innenfläche bestimmenden Innendurchmesser des Pumpengehäuses durch wenigstens einen zwischen Wandstutzen und Pumpschlauch sitzenden Packungsring eingespannt sind.

Nach einem weiteren Merkmal der Erfindung ist der Einspannbereich des Schlauchendes von einem schulterartigen Stopfbuchsengrund des Wandstutzens bestimmt, dessen Abstand zur Innenfläche der Gehäusewandung im Bereich von deren Dicke liegt.

Zwischen dem Stopfbuchsengrund und einer Stopfbuchsbrille --od.dgl. Abschlußelement des Wandstutzens -- sowie zwischen der Wandung des Wandstutzens und dem Pumpschlauch wird erfindungsgemäß zumindest ein Packungsring, bevorzugt aus elastischem Werkstoff eingespannt, beispielsweise eine Elastomerstopfbuchse.

Zur Lagesicherung ist zudem zwischen Stopfbuchsengrund und Packungsring wenigstens ein Stopfbuchsengrundring angeordnet.

Dank dieser Maßgaben wird eine Reduzierung der erwähnten Stauch-Knick-/Biegelängen des Pumpschlauches durch Einspannung des Pumpschlauches unmittelbar am Innendurchmesser des Pumpgehäuses erreicht; darüberhinaus erfolgt die Pumpschlaucheinspannung mittels Elastomerstopfbuchsen zur Reduzierung der spezifischen Einspannkräfte am Pumpschlauch und zum gleichzeitigen Abdichten des Pumpschlauches gegenüber dem Pumpengehäuse.

Dazu dient auch das Merkmal, den Durchmesser des Wandstutzens etwas größer zu wählen als den Außendurchmesser des Pumpschlauches, um die anschmiegende Verformung der Elastomerstopfbuchse zu gewährleisten.

Vorteilhafterweise wird in den Schlauchinnenraum endwärts ein Pumpenstutzen eingeschoben und an der Stopfbuchsenbrille od.dgl. Abschlußelement mittels einer von ihm abkragenden Außenrippe gehalten; der Pumpenstutzen liegt mit einem Einsteckabschnitt innenseitig dem Querschnitt des Pumpschlauches zumindest in dessen Einspannbereich an und stützt ihn formhaltend ab.

So wird dank der Erfindung eine Erhöhung der Lebensdauer des Pumpschlauches im Abschnitt zwischen Arbeitsbereich sowie druckseitiger Einspannstelle -- und damit eine deutliche Standzeitverbesserung insgesammt -- erreicht.

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
- Fig. 1:: die Draufsicht auf eine teilweise geschnittene Pumpe und
- Fig. 2:: den Schnitt durch Fig. 1 nach deren Linie II-II.

Eine Schlauchpumpe 10 weist in einem schüsselartigen Pumpengehäuse 12 eines Innendurchmessers d von etwa 320 mm und einer Höhe h von etwa 75 mm einen Läufer 14 auf, der an einer Pumpenwelle 16 um deren Achslinie A drehbar ist.

Die Pumpenwelle 16 ist im Bereich eines -- einen mittleren Außendurchmesser b von etwa 95 mm besitzenden -- zentrischen Lagerhalses 18 des aus starrem Werkstoff bestehenden, bevorzugt aus Metall gegossenen Pumpengehäuses 12 mittels eines Axiallagers 20 und eines Radiallagers 22 gelagert, zwischen denen eine Distanzbüchse 24 die Pumpenwelle 16 umfängt. Diese Distanzbüchse 24 ist von einem Sicherungsring 26 für das Axiallager 20 sowie einem Sicherungsring 27 für das Radiallager 22 umgeben. Mit 28 ist ein Raum für Lagerfett zwischen den Sicherungsringen 26, 27 bezeichnet, mit 30 ein Abstandsring für das Axiallager 20 innerhalb eines Zwischenringes 26a, dem ein äußerer Spritzring 32 benachbart ist. An das Radiallager 22 schließt läuferseitig an einen äußeren Stützring 27a zum Läufer 14 hin ein Dichtelement 34 an.

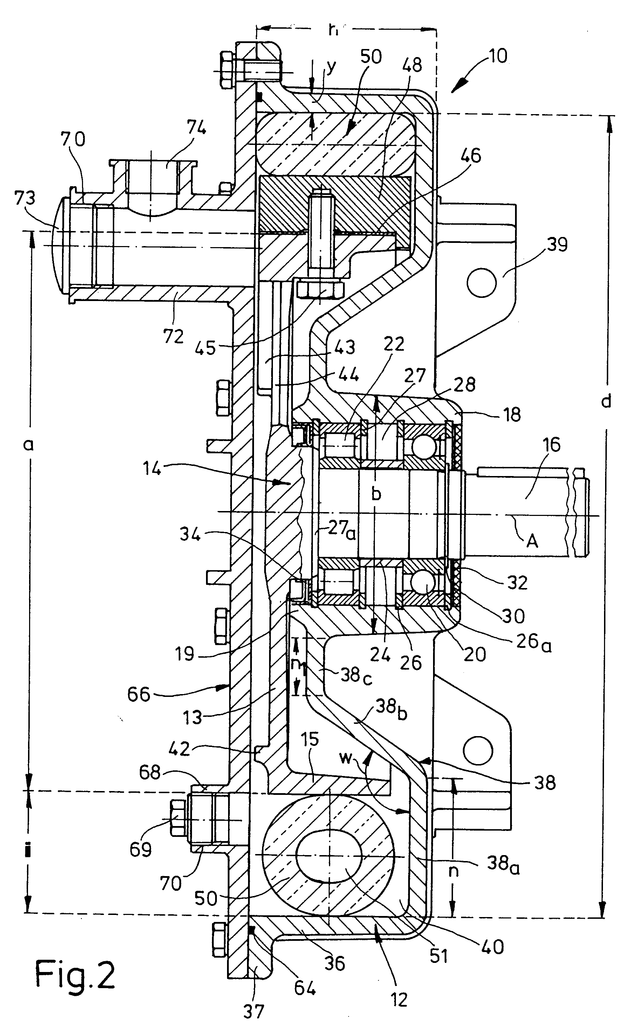

Der an die Wandung 36 des Pumpengehäuses 12 angeformte Boden 38 setzt sich gemäß Fig. 2 querschnittlich aus einem zur Wandung 36 etwa rechtwinkeligen Bodenabschnitt 38a der Querschnittslänge n von etwas mehr als 55 mm, einem von diesem in einem Neigungswinkel w von etwa 120° ausgehenden geneigten Bodenabschnitt 38b sowie einem ringförmigen Bodenabschnitt 38c der Querschnittslänge n1 von etwa 25 mm zusammen, der sich -- parallel zum erstgenannten Bodenabschnitt 38a -- vom geneigten Bodenabschnitt 38b zum Lagerhals 18 erstreckt und an diesen angeformt ist. Der Lagerhals 18 ragt geringfügig mit einer jenes WDR-Element 34 aufnehmenden Ringrippe 19 axial über den ringförmigen Bodenabschnitt 38c zum Läufer 14 hin.

Die Wandung 36 und der anschließende Bodenabschnitt 38a des Pumpengehäuses 12 begrenzen mit dem geneigten Bodenabschnitt 38b einen i.w. ringförmigen Rinnenraum 40. An die Außenseite des Bodens 38 sind Anschlußlaschen 39 zur Pumpenmontage angegossen.

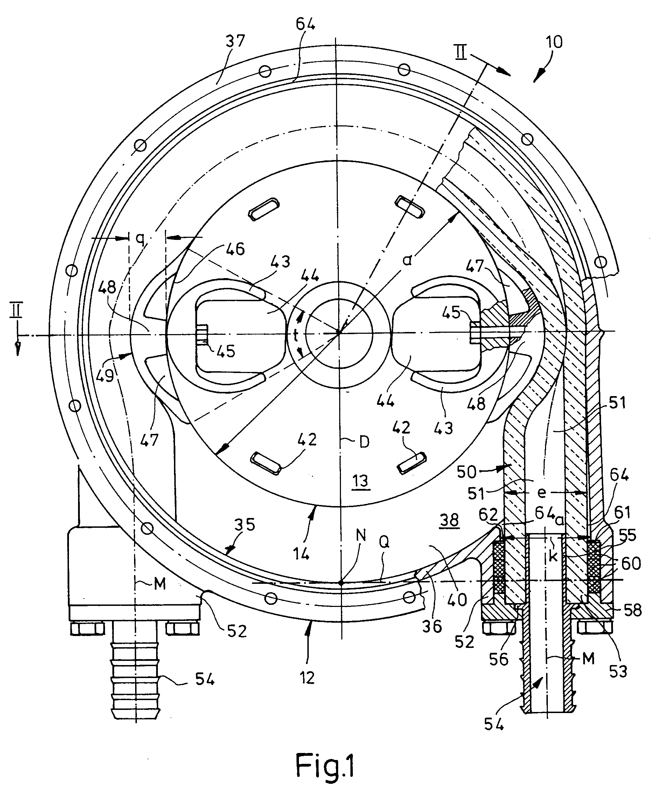

Der an die Pumpenwelle 16 angeformte Läufer 14 ist mit einer in dem -- mit Gleit- oder Kühlmittel gefüllten -- Rinnenraum 40 eintauchenden, von einem Läuferboden 13 ausgehenden Läuferwand 15 ebenfalls schüsselähnlich ausgebildet, und von seiner äußeren Fläche stehen Formnoppen 42 und -- in Draufsicht hufeisenähnliche -- Förderschaufeln 43 ab. Diese umgeben Durchbrüche 44 im Läuferboden 13, wie vor allem Fig. 1 zeigt. Der Außendurchmesser a des Läufers 14 mißt etwa 220 mm, so daß sich der mittlere radiale Abstand i der Läuferwandung 15 in jenem Rinnenraum 40 von der Gehäusewandung 36 mit nahezu 50 mm errechnet.

Die Läuferwand 15 wird von zwei Schrauben 45 zur Befestigung jeweils eines Anstellbleches 46 und eines Gleitschuhs 48 durchsetzt, der gemäß Fig. 1 eine gekrümmte Gleitfläche 49 anbietet mit einem maximalen Abstand q von etwas mehr als 20 mm von der Läuferwand 15 sowie einer durch einen Winkel t von etwa 65° bestimmten Länge. Die Kontur der Gleitfläche 49 in Draufsicht entspricht etwa der eines halben Ovals, geschnitten in der längeren Achse des Ovals.

Der mit in Draufsicht dreiecksartigen Durchtrittsöffnungen 47 versehene Gleitschuh 48 drückt während der Drehung des Läufers 14 einen -- in seinem Rinnenraum 40 zwischen der Wandung 36 des Pumpengehäuses 12 sowie der Läuferwand 15 -- angeordneten Pumpschlauch 50 eines Außendurchmessers e von etwa 52 mm partiell so zusammen, daß das Volumen des Schlauchinnenraumes 51 zeitweilig gegen null geht und so innerhalb des Pumpschlauches 50 eine Förderkammer für zu förderndes Medium -- beispielsweise Farbe, Industrielauge od. dgl. -- entsteht; dieses wird während der Drehung des Läufers 14 durch die beschriebene Quetschstelle mitgenommen.

Der Pumpenschlauch 50 aus flexibel verformbarem Werkstoff erstreckt sich -- wie gesagt: im Rinnenraum 40 -- U-förmig zwischen zwei zueinander parallelen Wandstutzen 52 des Pumpengehäuses 12 und seine Schlauchenden 53 schließen innerhalb der Wandstutzen 52 jeweils an einen eingeschlossenen Pumpenstutzen 54 an. Dieser ist mit einer radialen Außenrippe 56 ausgestattet, die innenseitig an eine am Wandstutzen 52 verschraubte Stopfbuchsbrille 58 anschlägt, und ragt in den Schlauchinnenraum (51) mit einem Einsteckabschnitt (55) ein, das nahe der Pumpenwandung (36) endet.

Die Stopfbuchsenbrille 58 hält dichtende kautschukelastische Packungsringe 60 und einen Stopfbuchsgrundring 61, der einem schulterartigen Stopfbuchsengrund 62 anliegt. Dessen Abstand zur Innenfläche 35 der Wandung 36 entspricht etwa deren Wanddicke y von etwa 8 mm.

Der eine Pumpenstutzen 54 bildet den Einlaufanschluß der Schlauchpumpe 10, in welche das zu fördernde Medium dank einer durch die Rückstellkraft des Pumpschlauches 50 erzeugten Saugkraft eingezogen wird. Der andere Pumpstutzen 54 dient als Austrag für das geförderte Medium.

Der Pumpschlauch 50 ist unmittelbar an der Wandung 36 des Pumpengehäuses 12 am Innendurchmesser d eingespannt, der schulterartige Stopfbuchsgrund 62 zwischen diesem Innendurchmesser d und einer Tangente Q an die Innenfläche 35 der Wandung 36 durch deren Schnittpunkt N mit dem zu den Mittelachsen M der Wandstutzen 52 parallelen Pumpendurchmesser D angeordnet.

Die Einspannung des Pumpschlauches 50 geschieht mittels einer Elastomerstopfbuchse 60 innerhalb des Pumpengehäuses 12, was die spezifischen Einspannkräfte am Pumpschlauch 50 vermindert und zudem dessen Abdichtung gegenüber dem Pumpengehäuse 12 gewährleistet. Fig. 1 läßt einen sich von jenem Stopfbuchsengrund zum Pumpeninneren hin verjüngenden Spalt 64 zwischen der Wandungsinnenfläche 35 und dem dadurch dichtend gelagerten Pumpschlauch 50 erkennen; letzterer berührt umlaufend an der Einspannstelle das Pumpengehäuse 12 nicht, was der mit 64a bezeichnete Abstand an der gegenüberliegenden Schlauchflanke in Fig. 1 und der innere Durchmesser k des Wandstutzens 36 bestätigen; dieser ist größer als der Schlauchaußendurchmesser e.

Die oben erwähnten Durchtrittsöffnungen 47 im Gleitschuh 48 sowie Durchbrüche 44 im Läuferboden 13 als Rückflußöffnungen begünstigen den Kühlmittelfluß.

Die Wandung 36 des Pumpengehäuses 12 geht randwärts in einen angeformten Außenflansch 37 über, dem -- unter Zwischenschaltung eines Dichtringes 65 -- ein mit ihm verschraubter Pumpendeckel 66 aufsitzt, aus dem ein Auslaßstutzen 68 geringen Durchmessers herausgeformt und von einer Verschlußschraube 69 mit Dichtring 70 verschließbar ist. Nahe dem in Fig. 2 oberen Ende des Pumpendeckels 66 findet sich eine weitere achsparallele Büchsenanformung 72 -- gegenüber Auslaßstutzen 68 -- größeren Durchmessers, die seitlich der Bewegungsbahn von Läuferwand 15 und Gleitschuh 48 abragt sowie axial mit einem Schauglas 73 sowie radial mit einem Abzweig 74 als Einfüllelement ausgestattet ist.

## Patentansprüche

1. Schlauchpumpe mit in einem Pumpengehäuse (12) in Draufsicht U-förmig angeordnetem Pumpschlauch (50) mit elastisch verformbarer Schlauchwand, der mit einem teilkreisförmig gebogenen Abschnitt an der Innenfläche (35) der Gehäusewandung (36) um eine Welle (16) eines Läufers (14) der Schlauchpumpe (10) sowie zu dieser in radialem Abstand in das Pumpengehäuse (12) eingelegt ist und dessen Querschnitt während des Fördervorganges unter Verminderung des Innenvolumens partiell verändert wird, wobei die von außen zugänglichen Anschlußenden (53) des Pumpschlauches (50) am Pumpengehäuse (12) eingespannt sind,
dadurch gekennzeichnet,
daß die Anschlußenden (53) des Pumpschlauches (50) in zwei Wandstutzen (52) des Pumpengehäuses (12) jeweils an einer Tangente (Q) an die Innenfläche (35) der Gehäusewandung (36) des Pumpengehäuses (12) durch deren Schnittpunkt (N) mit dem zu den Mittelachsen (M) der Wandstutzen (52) parallelen Pumpendurchmesser (D) an einem die Innenfläche (35) bestimmenden Innenkreis des Pumpengehäuses (12) durch wenigstens einen zwischen Wandstutzen (52) und Pumpschlauch (50) sitzenden Packungsring (60) eingespannt sind.

2. Schlauchpumpe nach Anspruch 1, dadurch gekennzeichnet, daß der Einspannbereich des Schlauchendes (53) von einem schulterartigen Stopfbuchsengrund (62) des Wandstutzens (52) bestimmt ist, dessen Abstand zur Innenfläche (35) der Gehäusewandung (36) im Bereich von deren Dicke (y) liegt.

3. Schlauchpumpe nach Anspruch 1 oder 2, dadurch gekennzeichnet, daß der/die Packungsring/e (60) zwischen Stopfbuchsengrund (62) und einer Stopfbuchsbrille (58) od.dgl. Abschlußelement des Wandstutzens (36) sowie zwischen dessen Stutzenwandung und dem Pumpschlauch (50) eingespannt ist/sind.

4. Schlauchpumpe nach Anspruch 1 oder 3, gekennzeichnet durch einen Packungsring (60) aus elastischem Werkstoff.

5. Schlauchpumpe nach Anspruch 3 oder 4, gekennzeichnet durch eine Elastomerstopfbuchse als Packungsring (60).

6. Schlauchpumpe nach einem der Ansprüche 2 bis 5, dadurch gekennzeichnet, daß zwischen Stopfbuchsengrund (62) und Packungsring (60) ein Stopfbuchsengrundring (61) vorgesehen ist.

7. Schlauchpumpe nach einem der Ansprüche 1 bis 6, dadurch gekennzeichnet, daß der Durchmesser (k) des Wandstutzens (36) am Stopfbuchsengrund (62) größer ist als der Außendurchmesser (e) des Pumpschlauches (50).

8. Schlauchpumpe nach wenigstens einem der Ansprüche 1 bis 7, dadurch gekennzeichnet, daß in den Schlauchinnenraum (51) endwärts ein Pumpenstutzen (54) eingeschoben und an der Stopfbuchsenbrille (58) od.dgl. Abschlußelement mittels einer von ihm abkragenden Außenrippe (56) gehalten ist.

9. Schlauchpumpe nach wenigstens einem der Ansprüche 1 bis 8, dadurch gekennzeichnet, daß der Pumpenstutzen (54) mit einem Einsteckabschnitt (55) innenseitig dem Querschnitt des Pumpschlauches (50) zumindest in dessen Einspannbereich (58-62) stützend anliegt.

## Claims

1. Hose pump with a pump hose (50) arranged in a U-shape in a top view in a pump housing (12), with an elastically deformable hose wall which is inserted in the pump housing (12) with an arcuately curved section on the inner surface (35) of the housing wall (36) around a shaft (16) of a rotor (14) of the hose pump (10) as well as at a radial distance therefrom, and of which the cross-section is partially varied during the pumping process, reducing the internal volume, wherein the connecting ends (53) of the pump hose (50), which are accessible from the outside, are mounted on the pump housing (12), characterised in that the connecting ends (53) of the pump hose (50) are mounted in two wall branches (52) of the pump housing (12) in each case at a tangent (Q) to the inner surface (35) of the housing wall (36) of the pump housing (12) through the point (N) of intersection thereof with the pump diameter (D) parallel to the centre axes (M) of the wall branches (52), on an inner circle of the pump housing (12) defining the inner surface (35), by at least one packing ring (60) seated between wall branch (52) and pump hose (50).

2. Hose pump according to claim 1, characterised in that the mounting region of the hose end (53) is defined by a shoulder-like stuffing box bottom (62) of the wall branch (52) of which the distance from the inner surface (35) of the housing wall (36) is in the region of the thickness thereof (y).

3. Hose pump according to claim 1 or 2, characterised in that the packing ring(s) (60) is/are mounted between a stuffing box bottom (62) and a gland (58) or the like sealing element of the wall branch (36) as well as between the branch wall and the pump hose (50).

4. Hose pump according to claim 1 or 3, characterised by a packing ring (60) made of elastic material.

5. Hose pump according to claim 3 or 4, characterised by an elastomeric stuffing box as a packing ring (60).

6. Hose pump according to any of claims 2 to 5, characterised in that a stuffing box bottom ring (61) is provided between stuffing box bottom (62) and packing ring (60).

7. Hose pump according to any of claims 1 to 6, characterised in that the diameter (k) of the wall branch (36) on the stuffing box bottom (62) is larger than the outside diameter (e) of the pump hose (50).

8. Hose pump according to one or more of claims 1 to 7, characterised in that a pump branch (54) is inserted endwards in the hose interior (51) and held on the gland (58) or the like sealing element by means of an outer rib (56) projecting from it.

9. Hose pump according to one or more of claims 1 to 8, characterised in that the pump branch (54) with an insertion section (55) on the inside abuts in supporting relationship against the cross-section of the pump hose (50) at least in the mounting region thereof (58-62).

## Revendications

1. Pompe péristaltique comprenant un tuyau de pompe (50), disposé, en forme de U vu du dessus, dans un corps de pompe (12), le tuyau de pompe comprenant une paroi de tuyau déformable de façon élastique et étant, avec un segment incurvé en forme d'arc de cercle, inséré dans le corps de pompe (12) sur la surface interne (35) de la paroi de corps (36) autour d'un arbre (16) d'un rotor (14) de la pompe péristaltique (10) et présentant un écart radial par rapport à cet arbre, tuyau de pompe dont la section est partiellement déformée pendant le processus de refoulement avec réduction du volume interne, les extrémités de raccordement (53) du tuyau de pompe (50), accessibles depuis l'extérieur, étant serrées sur le corps de pompe (12),
caractérisée en ce que les extrémités de raccordement (53) du tuyau de pompe (50) sont serrées chacune, par au moins une bague d'étoupage (60) située entre la tubulure de paroi (52) et le tuyau de pompe (50), dans deux tubulures de paroi (52) du corps de pompe (12) au niveau d'une tangente (Q) à la surface interne (35) de la paroi de corps (36) du corps de pompe (12) traversant son point d'intersection (N) avec le diamètre de pompe (D) parallèle aux axes médians (M) des tubulures de paroi (52) sur un cercle intérieur du corps de pompe (12) définissant la surface interne (35).

2. Pompe péristaltique selon la revendication 1, caractérisée en ce que la zone de serrage de l'extrémité de tuyau (53) est définie par un fond de presse-étoupe (62), du type à épaulement, de la tubulure de paroi (52) dont l'écart par rapport à la surface interne (35) de la paroi de corps (36) se situe dans la plage de l'épaisseur (y) de celle-ci.

3. Pompe péristaltique selon la revendication 1 ou 2, caractérisée en ce que la/les bague(s) d'étoupage (60) est/sont serrée(s) entre le fond de presse-étoupe (62) et un collet de presse-étoupe (58) ou élément de terminaison similaire de la tubulure de paroi (36) ainsi qu'entre sa paroi de tubulure et le tuyau de pompe (50).

4. Pompe péristaltique selon la revendication 1 ou 3, caractérisée par une bague d'étoupage (60) en matériau élastique.

5. Pompe péristaltique selon la revendication 3 ou 4, caractérisée par un presse-étoupe élastomère à titre de bague d'étoupage (60).

6. Pompe péristaltique selon une des revendications 2 à 5, caractérisée en ce que, entre le fond de presse-étoupe (62) et la bague d'étoupage (60), il est prévu une bague de fond de presse-étoupe (61).

7. Pompe péristaltique selon une des revendications 1 à 6, caractérisée en ce que le diamètre (k) de la tubulure de paroi (36) sur le fond de presse-étoupe (62) est supérieur au diamètre extérieur (e) du tuyau de pompe (50).

8. Pompe péristaltique selon au moins une des revendications 1 à 7, caractérisée en ce qu'une tubulure de pompe (54) est insérée dans l'espace intérieur de tuyau (51) dans le sens de l'extrémité et est maintenue sur le collet de presse-étoupe (58) ou sur l'élément de terminaison similaire au moyen d'une nervure extérieure (56) qui dépasse de cette tubulure.

9. Pompe péristaltique selon au moins une des revendications 1 à 8, caractérisée en ce que la tubulure de pompe (54) repose, par un segment enfichable (55), côté intérieur de la section du tuyau de pompe (50), en appui au moins dans sa zone de serrage (58-62).
